# EUROPEAN PATENT APPLICATION

(11) **EP 3 915 944 A1**
(43) Date of publication of application: **01.12.2021**
(21) Application number: 20177181.3
(22) Date of filing: 28.05.2020
(51) Int. Cl.: C01G 53/00, G02F 1/361, B01L 1/00, F25B 1/00, F25B 21/00, F28F 23/00

(54) **ADIABATIC COOLANT**

(71) Applicant: Max-Planck-Gesellschaft zur Förderung der Wissenschaften e.V., 80539 München (DE)
(72) Inventor: Chen, Jiasheng, CB4 1DZ, Cambridge (GB); Brando, Manuel, 01187 Dresden (DE); Banda, Jacintha, Marathahalli, Bangalore - 560037 (IN); Grosche, Friedrich Malte, Comberton CB23 7BZ (GB)
(74) Representative: Manitz Finsterwald Patent- und Rechtsanwaltspartnerschaft mbB

(57) **Abstract**

The invention relates to an adiabatic coolant for cooling below 7 K, the adiabatic coolant comprising:
a compound according to formula (1):

(Yb₁₋ₓAₓ)ₐ(Ni_{1-y}By)_{b}(C)_{c} (1)

wherein A is one or more members selected from rare earth elements other than Yb;
B is one or more members selected from the group of members consisting of Al, Ga, Ge, Fe, Mn, V, Co, Cu, Rh, Pd, Ag, Ir, Pt, and Au;
C is one or more members selected from the group of members consisting of Sn, In, Tl, Pb, and Bi;
x is in the range of 0 to 0.9;
y is in the range of 0 to 1 when B is one or more selected from the group consisting of Al, Ga, Ge, Fe, Mn, V, Co, Cu, Rh, Ag, Ir, and Au;
y is in the range of 0 to less than 1 when B is Pd or Pt; and wherein
a, b and c satisfy the following conditions:
a = c
0.25a ≤ b ≤ 4a.

## Description

The present invention relates to an adiabatic coolant for cooling below 7 K, a method of producing the adiabatic coolant, a use of the adiabatic coolant as well as an adiabatic cooling device.

The ability to generate and stabilise low temperatures is a key technology in modern societies. Nowadays, temperatures below 4 K or -269.15°C are indispensable for academic basic research, e.g., in solid state physics, astrophysics, particle or high energy physics as well as metrology. In addition, entire branches of industry are concerned with the utilization of superconductivity, e.g., in clinical MRI scanners or in power cables, and other quantum technologies, e.g., quantum information technology, quantum computers, quantum cryptography, quantum communication and quantum simulation. Only extreme cooling can weaken disturbing thermal effects enough so that quantum physical laws can be applied to commercial products, e.g., sensitive amplifiers. Also large parts of our population already benefit indirectly from cryogenics. For example, improvements in particularly sensitive sensors, detectors and telescopes, both earth-bound and in space programmes, lead to a steady increase in the informative value of remote sensing, earth observation, weather forecasts and military operations.

Generation of temperatures much below 4 K can be achieved nowadays by three different methods, namely ⁴He- and ³He-evaporation cooling, ³He-⁴He-dilution cooling and magnetic cooling by adiabatic demagnetisation.

Cooling systems that use the noble gas Helium (He) are used almost exclusively. It is possible, with the aid of complicated apparatuses, to cool down to temperatures of about 1.4 K (corresponds to -271.75°C) with naturally occurring helium, which consists of 99.999863% ⁴He and only 0.000137 % ³He. To generate lower temperatures down to 5 mK, the extremely rare helium isotope ³He must be used. He dilution refrigerators are well-established beyond developmental stage and commercially available. They provide reliable cooling to below 100 mK if the system is properly designed, manufactured, maintained and handled. However, the gas handling system is often cumbersome, e.g. due to blockages occurring with unavoidable contaminations inside the He system, which require the whole system to be warmed up and cooled down again after removal of the blockage, thereby wasting precious resources.

The main source of ³He is currently the decay of tritium. Tritium in turn is mainly used for nuclear weapons and is therefore fortunately produced less and less frequently due to international disarmament treaties. Thus, gaseous ³He is extremely rare and outrageously expensive and in the future, the price will continue to rise steadily. Also, the finite and scarce amount of ³He will ultimately limit mass production of dilution refrigerators as the platform for, e.g., next-generation quantum technologies. The application of He dilution refrigeration is further limited, as undesirable vibrations caused by pumping liquid or gaseous helium through the cooling system might impair sensitive setups. Another limitation of dilution refrigerators is that they require calm gravity, which makes them hard to implement for mobile use and problematic for space applications.

Suitable alternatives to He-cooling exist in the form of magnetic cooling systems. Magnetic cooling is based on the temperature dependence of the entropy of the magnetic moments in the applied cooling material. Because of the so-called magnetocaloric effect (MCE) certain materials undergo a temperature increase when placed into a strong magnetic field. If the MCE is reversed, this leads to a temperature decrease when the magnetic field is removed. The effect can be based on electronic magnetic moments as well as nuclear magnetic moments. The MCE is being exploited in the so-called adiabatic demagnetisation refrigerator (ADR) since nearly a century ago.

The method of magnetic cooling to sub-Kelvin temperatures by adiabatic demagnetisation was independently proposed by P. Debye and W. F. Giauque (Debye, Annalen der Physik, 368 (1926) 1154-1160) using paramagnetic salts or paramagnetic garnet minerals, delivering temperatures in the region of 20 mK. In fact, most traditional ADRs for the temperature range between 40 mK < T < 2 K use hydrated paramagnetic salts or garnets as cooling agents. This group of popular cooling materials includes, e.g., Cerium Magnesium Nitrate for the 10 to 40 mK temperature range, Chromic Potassium Alum, Cesium Chromic Alum and Ferric Ammonium Alum (FAA) for the 40 to 100 mK temperature range, Manganese Ammonium Sulfate for temperatures above 0.3 K and Dysprosium Gallium Garnet, Gadolinium Gallium Garnet (GGG) or Dysprosium Aluminum Garnet for temperatures below 1 K. Although these materials are commonly used in adiabatic cooling, they are impractical and extremely sensitive. Hydrated paramagnetic salts degenerate or melt already at moderate temperatures, e.g., at 40°C for FAA, and are prone to dehydration when exposed to environmental influences. This often imposes significant restrictions on equipment design due to the need for hermetic sealing of these insulating materials and their weak thermal conductivity requiring an extra wire harness for assuring good thermal contact.

Despite these drawbacks of the paramagnetic salts and garnets, research and development concerning novel adiabatic substances was neglected since the 1970s because at that time, due to the adequately available and favourably priced ³He, the advantages of ³He- or ³He-⁴He-refrigerators which provided continuous cooling prevailed. Even though promising applications like zero gravity cryostats for magnetic cooling systems emerged, until 2014 no further promising material classes have been proposed besides the known paramagnetic salts and garnets.

More recent developments show that certain metallic materials provide attractive alternatives as coolants in ADRs, e.g., Ce₄Pt₁₂Sn₂₅ and CeNi_{8.9}Co_{0.1}Ge₄, YbCu_{4.6}Au_{0.4} and YbCu₄Ni (Sereni, Philosophical Magazine (2020), 1-15). YbPt₂Sn was shown to work as a magnetocaloric material. YbPt₂Sn crystallizes in a hexagonal structure and features a high Yb density featuring an unusually weak magnetic Yb-Yb interaction. It has a magnetic ordering temperature T₀ ≈ 240 mK and enables adiabatic demagnetisation cooling from 2 K down to T_{f} = 0.16 K (Jang et al., Nature Commun., 6, (2015) 8680; Gruner et al., J. Phys.: Condes. Matter, 26 (2014) 485002)). However YbPt₂Sn is synthesised from very expensive raw materials.

It is an object of the present invention to improve cooling down to very low temperatures and make it more economical.

The object is accomplished by an adiabatic coolant for cooling below 7 K with the features of claim 1, a method of producing the adiabatic coolant, use of the adiabatic coolant as well as an adiabatic cooling device. In particular, an adiabatic coolant for cooling below 7 K according to the present invention comprises a compound according to formula (1):

(Yb₁₋ₓAₓ)ₐ(Ni_{1-y}B_{y})_{b}(C)_{c} (1)

wherein A is one or more members selected from rare earth elements other than Yb;
B is one or more members selected from the group of members consisting of Al, Ga, Ge, Fe, Mn, V, Co, Cu, Rh, Pd, Ag, Ir, Pt, and Au;
C is one or more members selected from the group of members consisting of Sn, In, Tl, Pb, and Bi;
x is in the range of 0 to 0.9;
y is in the range of 0 to 1 when B is one or more selected from the group consisting of Al, Ga, Ge, Fe, Mn, V, Co, Cu, Rh, Ag, Ir, and Au;
y is in the range of 0 to less than 1 when B is Pd or Pt; and wherein
a, b and c satisfy the following conditions: a = c and 0.25a ≤ b ≤ 4a, wherein the value of a is not equal to 0.

Formula (1) describes a family of intermetallic alloys which can be used as refrigeration material in solid state cooling systems like ADRs. The family of intermetallic alloys according to the invention comprises compounds with metallic behaviour, offering a high density of stable trivalent Yb³⁺ with weakly coupled electronic Yb³⁺ magnetic moments. They do not exhibit a magnetic order above a material-specific magnetic ordering temperature T₀, e.g. 0.1 K. This provides the magnetic entropy for use in adiabatic cooling.

The adiabatic coolant is made of cost-efficient raw materials, e.g., by using Ni in the compound. Also, raw materials of lower quality, i.e., purity, can be sufficient for compound synthesis, which helps keeping the material cost even more reasonable. The combination of Yb and Ni with a wide variety of supplementary elements enables fine-tuning of the properties of the coolant, like the base temperature, cooling capacity, density or others.

The intermetallic compounds according to the invention are mechanically robust, enabling straightforward processing of the coolant, e.g. by drilling, milling, grinding or lathing. Thus, the coolant may be brought into desired shapes easily, providing for simple manufacturing of powerful cooling pills. The compounds according to the present invention are chemically stable and very insensitive to influences of oxygen and humidity making them durable and sustainable. This enables the use without a hermetically sealed protective container which would have to be cooled as well and which would thereby lessen the cooling performance of the coolant. Consequently, the coolant is low-maintenance and suited for long-term use without degradation.

The adiabatic coolant according to the present invention has a large volumetric entropy capacity S_{V}, e.g. of around S_{V} = 0.15 J/Kcm³, which provides an excellent cooling performance per volume and ensures high temperature stability, since temperature fluctuations due to short-term heat inputs are dampened effectively. At medium temperatures, e.g. below 300 mK, extremely long stability times of several days may be achieved, making the adiabatic coolant reliable while providing a user friendly handling. Furthermore, less material is needed of a high S_{V} compound in order to provide the same cooling capacity as for a lower S_{V} compound. This is cost-efficient and economic and also helps in promoting miniaturization of cooling setups. Requiring much smaller magnets and lesser resources for pre-cooling further improves the economic efficiency of ADRs. Overall smaller ADR systems are thus possible, which is particularly beneficial for space-borne cryostats.

With these compounds, cooling below temperatures of 7 K or even 4 K and in particular below 2 K and down to approximately 140 mK or even 100 mK is possible completely independent of expensive and scarce ³He, and without a complex dilution refrigerator setup. The invention enables thus a more compact setup design and is user-friendly as no cumbersome gas handling is necessary. Further, the coolant works independently of gravitational force in ADR, thus qualifying for use in zero gravity, e.g., in space-science missions.

The invention includes adiabatic coolants featuring a high thermal conductivity. Thus, no additional thermally conducting components such as metal wires need to be inserted into the coolant, preventing a reduction of the cooling performance due to cooling of the metal wires or heating of the wires due to eddy currents. The high thermal conductivity of the coolant results in a fast absorption of heat, which makes it well-suited for quick and short cooling cycles, e.g. in multi-stage, continuous cooling systems. At the same time, the absolute electrical metallic conductivity is low, making heating of the coolant due to eddy currents negligible.

There are no hints of superconductivity in compounds according to formula (1), which means that no weakening effect on the electronic thermal conductivity is expected, and no signs of a significant Kondo effect.

All these properties make the adiabatic coolant according to the invention straightforwardly applicable in existing (commercial) magnetic cooling systems. Due to its very good temperature stability up to temperatures of approximately 400°C, the adiabatic coolant can without difficulty be used in ultrahigh vacuum applications which require a baking step.

Preferably, the adiabatic coolant comprises a compound according to formula (2):

(Yb₁₋ₓAₓ)ₐ(Ni_{1-y}B_{y})_{b}(Sn_{1-z}C_{z})_{c} (2)

wherein z is in the range of 0 to 1. Formula (2) describes a subgroup of the family of intermetallic alloys comprising Yb, Ni and Sn. The subgroup includes YbNi₂Sn consisting of one fraction of amount of substance elemental Yb, two fractions elemental Ni and one fraction elemental Sn, as well as a variety of sibling compounds. With compounds of formula (2), an excellent cooling effect can be realized.

Advantageous embodiments of the invention are given in the dependent claims, the description and the accompanying drawings.

Preferably, in the compound of formula (1) or (2), x is in the range of 0 to 0.7, preferably in the range of 0 to 0.5, more preferably in the range of 0 to 0.3. With decreasing values for x, the Yb density of the alloy increases and thus the Yb-Yb magnetic interaction is less disturbed. Hence, for x = 0, the largest volumetric entropy capacity S_{V} and thus the best cooling performance is achieved. However, the cooling performance may remain nearly unchanged for x = 0.1. When substituting Yb by rare earth elements to the degree of x = 0.3, 0.5 or even 0.7, the compounds still work as cooling materials and may exhibit the same cooling capacity per Yb ion. Thus, the resulting adiabatic coolants still perform their function, while it is possible to use less expensive material compositions and fine-tune the coolant to the actual requirements. Therefore, further preferred ranges for x are from 0 to 0.1, from 0.1 to 0.7, from 0.1 to 0.5, from 0.1 to 0.3, but also from 0.3 to 0.7 and from 0.3 to 0.5.

It is further preferred that y is equal to or greater than 0.1. The combination of Ni with a certain amount of one or more members of the group of Al, Ga, Ge, Fe, Mn, V, Co, Cu, Rh, Pd, Ag, Ir, Pt, and Au enables fine-tuning the crystal structure as well as the cooling capacity of the resulting alloy to the required needs.

Preferably, y is equal to or less than 0.9, more preferably equal to or less than 0.7, even more preferably equal to or less than 0.5, even further more preferably equal to or less than 0.3. The phase purity of the compound and/or its crystal structure may be improved by keeping the fraction of dopant small, while the introduction of varying amounts of doping elements enables to adjust, e.g., the density of the compound in order to adapt its overall properties.

Preferably, the ratio of a:b:c is 1:1:1 or 1:1.7:1 or 1:2:1 or 1:4:1, preferably a is 1, b is 1 or 1.7 or 2 or 4 and c is 1. These ratios ensure a reasonably high Yb density in the adiabatic coolant, helping to achieve a good volumetric entropy capacity S_{V}. The compound may be polycrystalline and may include several phases with different ratios of a:b:c, which may also make individual contributions to the cooling capacity of the material.

Preferably, a compound according to formula (1) has a structure corresponding to a Heusler compound having space group No. 225 or corresponding to a half Heusler compound having space group No. 216 or corresponding to a small hexagonal ZrPt₂Al structure type having space group No. 194, preferably, the structure is a cubic L2₁ type structure corresponding to a Heusler compound or a C1_{b} structure corresponding to a half Heusler compound having space group No. 216. For Heusler compounds, the ratio a:b:c is 1:2:1, for half Heusler compounds, the ratio a:b:c is 1:1:1. The inventors have recognized that the cooling ability may be strongly dependent on the compound's crystal structure, which may influence the presence of weakly coupled Yb moments. For cubic Heusler type structures, a good compound performance in ADR is observed, but also other crystal structure types, e.g., hexagonal crystal structures may be the main structural phases of a well-performing coolant.

Preferably, the compound has a metastable phase. In particular, the metastable phase may include a high temperature phase with a phase transition temperature of, e.g., around 1000°C or 1200°C or 1300°C. The metastable phase may be the phase enabling adiabatic cooling. Sufficient stabilisation of the metastable phase, e.g., stabilisation of a high temperature phase also at low temperatures, may be achieved during synthesis of the compound, e.g., by rapidly cooling down the compound below the phase transition temperature without allowing a phase transition. Thus, favourable properties of the metastable phase may be exploited under the conditions prevalent during application of the compound.

The adiabatic coolant is preferably in the form of an ingot, a powdered substance or a sintered powder. An ingot may be obtained as the product of the synthesis of the coolant and used directly even without further processing providing for easy and straightforward handling. The ingot may provide a high material density and thus a good cooling capacity. A powdered substance may either be brought into the shape of a cooling pill or alternatively be used to enclose the sample to be cooled therein. By this approach, the cooling compound may be partially or completely brought into form-fitting contact to the sample to be cooled, thereby enabling a very efficient heat transfer between the coolant and the sample. Sintering of a cooling pill or even of a powder-enclosed sample is also possible, making mechanically stable cooling pills of any desired shape or size accessible. A powdered and pressed coolant has the advantage of a very large surface area, which may be favourable in absorbing residual gas molecules, e.g., He gas molecules, from a vacuum cooling chamber, thereby improving the quality of the vacuum.

It is also preferred when the adiabatic coolant has at least one flat surface enabling easy mounting of a sample to be cooled directly to the coolant, e.g. having the form of an ingot or a cooling pill, while offering a well-defined surface for establishing proper thermal contact between the coolant and the sample to be cooled. For example, the sample may be pressed onto the flat surface of the coolant. The coolant may also offer several flat surfaces enabling the contacting of several samples to be cooled simultaneously or to easily position the coolant and the sample inside a cooling chamber. For example, the coolant may be of cylindrical shape, offering two flat surfaces, or of conical shape, offering one flat surface. Depending on the sample requirements, also a curved surface of the coolant may be used to provide a high contact area with a sample.

Another aspect of the present invention relates to a method of producing an adiabatic coolant as described above and in the claims, comprising the steps of
(1) providing each of the elements contained in the final compound of the adiabatic coolant in elemental form in an amount depending on the stoichiometry of the adiabatic coolant,
(2) mixing the elements in a crucible,
(3) melting the mixed elements at least once, in particular in an arc melting process to form a melt,
(4) cooling the melt.

This method for producing an adiabatic coolant is quick, easy to perform and cost-efficient. The amount of the elements may be determined by weighing in step (1). The synthesis of the compound may be performed as a one-stage reaction, where all elemental raw materials are mixed together in a crucible in step (2) for performing the reaction. The reaction is preferably performed under a protective atmosphere. For melting of the elements in step (3) an oven, e.g., an arc melting furnace, may be used and the melting may be performed once or more preferably several times in order to improve the homogeneity of the melt and to provide for a chemical reaction which is as complete as possible.

Cooling of the melt in step (4) may either be performed by actively cooling the melt, e.g., by bringing the hot melt in contact with water or water-cooled heat exchangers. Alternatively, sufficient cooling may be achieved by removing the heat source from the melt, e.g. by simply switching off the arc furnace. In particular, a water-cooled Cu crucible used for the synthesis may itself serve as heat exchanger after switching off the furnace. After a successful synthesis, the intermetallic alloys according to the invention may be able to adopt at least two different structural modifications. The desired cooling capacity may only be provided by a certain phase, e.g., by a metastable high-temperature phase. The phase transition between both modifications occurs at a phase transition temperature which may be, e.g., approximately 950°C, 1000°C, 1200°C or 1300°C. In order to stabilise the high-temperature modification, the temperature of the melt might need to be lowered below the phase transition temperature within a short time, thereby freezing the solidified melt in a high temperature structural phase. In this case, the spatial dimensions of the melt during cooling, e.g. as defined by the crucible, need to be restricted, e.g. to the size of 5x5x5 mm³, in order to ensure rapid cooling also at the core of the melt. The resulting material may be polycrystalline as well as brittle.

The crucible used in the method as described above preferably is characterized by the following features: Its material should remain dimensionally stable even at around 120% of the maximum reaction temperature and it should not react chemically with the compound of the adiabatic coolant. Also, the crucible should be sufficiently robust to withstand the possibly strongly exothermic reactions of the elements contained in the alloy, e.g. of Yb and Sn. Examples of ideal crucible shapes include cylindrical or conical shapes. Examples of ideal crucible materials include aluminium oxide (Al₂O₃), zirconium dioxide (ZrO₂), Niobium (Nb), Tantalum (Ta), Tungsten (W) and water-cooled Copper (Cu).

Suitable reaction temperatures may be provided by an oven. Different types of ovens can be used while ideally the following requirements are met: the maximum temperature of the oven should be approximately 50°C higher than the melting point of the highest melting element, i.e. approximately 1500°C if using Ni, 1600°C if using palladium (Pd) and 1820°C if using platinum (Pt). Also, the reaction chamber should be floodable with a protective gas atmosphere of approximately 700 mbar. Further, like the reaction crucible, the whole oven should be sufficiently robust to withstand strong exothermic reactions, e.g. of Yb and Sn. Examples of ideal oven types include arc furnaces, induction furnaces and high-temperature muffle furnaces.

In step (1) Yb is preferably provided in excess with respect to the stoichiometry of the final compound, in particular in an excess in the range of 8 wt% to 20 wt% based on the total weight of Yb in the final compound. Due to its high vapour pressure, Yb atoms may evaporate and condense inside the reaction chamber during the synthesis. By adding Yb in excess, enough Yb is provided in order to remain in the melt and thus for the synthesis to result in a defect-free compound with a high Yb density.

The steps (2) and (3) of mixing and melting are preferably performed as a two-stage reaction, wherein preferably in a first stage Yb and optionally further one or more rare earth element(s) other than Yb are mixed in a step (2-1) with at least one member selected from the group of members consisting of Sn, In, Tl, Pb, and Bi and are melted in a step (3-1) to obtain an intermediate product, and in a second stage the intermediate product obtained after step (3-1) is mixed in a step (2-2) with at least one member selected from the group of members consisting of Ni, Al, Ga, Ge, Fe, Mn, V, Co, Cu, Rh, Pd, Ag, Ir, Pt, and Au to obtain a mixture, wherein when Pt or Pd is added in step (2-2), at least a further metal selected from the group of members consisting of Al, Ga, Ge, Fe, Mn, V, Co, Cu, Rh, Ag, Ir, and Au is added to obtain a mixture, and melting the mixture in a step (3-2) to form a melt. By performing the synthesis as two separate partial reactions, well-defined and matched reaction conditions can be applied while performing each partial reaction and thus an efficient execution of the partial reactions can be ensured. For example, the reaction temperature may be adjusted separately for each partial reaction. If applicable, also more than two partial reaction steps may be performed.

Preferably, the method further comprises a step (5) of powdering the product obtained after step (4), e.g. if the geometric shape of the solidified melt is not suitable for direct use in a cooling application. For this purpose, one or more obtained coolant ingots may be powdered. During powdering, the grain size may be adjusted to obtain a powder with tailored properties, e.g., with a suited surface area. The obtained powder can be easily molded into a desired shape.

Therefore, the method preferably further comprises a step of forming the powdered product into a body of required shape and optionally sintering the shaped body. The properties, e.g., the density, of the pressed cooling pill can favourably be adjusted to the requirements by this approach by adjusting the grain size, the pressing force or, if applicable, the sintering conditions such as the sintering temperature profile. Moreover, a cooling pill formed from pressed powder may also have a required size. In particular, a pressed cooling pill may be larger than the maximum size achievable for an ingot during synthesis. By sintering of the pressed cooling pill, the mechanical stability may be improved and the cooling properties may be adjusted. By pressing a powdered coolant into a container, which may also be sealable, any contact of the coolant with the surroundings may be prevented, enabling use of the coolant also in chemically unfavourable environments.

Preferably, to a further embodiment the method comprises moulding of the adiabatic coolant into a shape with at least one flat surface. This can either be achieved for an ingot by performing the synthesis in a crucible generating an ingot with a flat surface or. Alternatively, the ingot may itself be post-processed and reshaped by drilling, milling, grinding, lathing or other mechanical applications. Alternatively, a powdered substance may be pressed to a cooling pill in a mould generating at least one flat surface, e.g., in a cylindrical mould. The resulting one or more flat surfaces favourably allow easy mounting of a sample to be cooled on the ingot or cooling pill.

A further aspect of the present invention pertains to the use of an adiabatic coolant as previously described and preferably obtainable by a method as previously described for adiabatic cooling to temperatures below 7 K. In particular, the adiabatic coolant may be used for cooling to minimal temperatures of below 1 K and even below 0.2 K or 0.15 K in an ADR setup. Minimal achievable temperatures may also be approximately 0.1 K. The cooling process based on the magnetic moments of the adiabatic coolant requires pre-cooling of the adiabatic coolant to temperatures in the range of several K, e.g. between 1.4 and 5 K, which can be achieved by ⁴He evaporation cooling, for example. In addition, the adiabatic cooling process requires the generation of high magnetic fields with magnetic flux densities between, e.g., 1.8 to 7 T or even more. Because of its flexibility regarding shape and size, the adiabatic coolant as described above may be used in many available ADRs. Due to its favourable properties, e.g., high Sv, high thermal conductivity, weak Yb-Yb coupling, chemical and mechanical stability, as described above in detail, the use of the adiabatic coolant helps to achieve a cost-efficient, simple, user-friendly and reliable cooling to temperatures as low as T_{f} ≈ 100 mK.

Another aspect of the present invention pertains to an adiabatic cooling device comprising an adiabatic coolant as described above, preferably obtainable by a method as described above. The cooling process may occur via adiabatic demagnetisation using a system that may include pre-cooling stages, magnets, thermal bridges and thermal switches.

Preferably, the adiabatic coolant of the adiabatic cooling device is at least partially arranged around a sample space. This ensures an efficient heat transfer between the coolant and the sample to be cooled. For example, the sample can be partially or even completely embedded in a powdered adiabatic coolant.

Preferably, the device comprises a magnetic field generator and a pre-cooling apparatus. The magnetic field generator may provide magnetic flux densities up to 8 T, up to 10 T or even up to higher flux densities. The pre-cooling apparatus may be a ⁴He-based refrigerator and may for example be equipped with a pulse tube cryostat, preferably reaching temperatures down to 1.4 K.

The invention will now be described in further detail and by way of example only with reference to the accompanying drawings as well as by various examples of the adiabatic coolant of the present invention. In the drawings there are shown:
- Fig. 1: an SEM analysis of as-cast YbNi₂Sn (Example 1);
- Fig. 2: an X-ray diffraction pattern of YbNi₂Sn recorded at T = 300 K (Example 1);
- Fig. 3: crystal structural models which contribute to the structural phases of adiabatic coolants, e.g., YbNi₂Sn (Example 1);
- Fig. 4: differential scanning calorimetry results of YbNi₂Sn (Example 1);
- Fig. 5: the temperature-dependent electrical resistivity of YbNi₂Sn (Example 1);
- Fig. 6: the temperature-dependent magnetic susceptibility of YbNi₂Sn (Example 1);
- Fig. 7: the temperature-dependent specific heat capacity of YbNi₂Sn (Example 1);
- Fig. 8: the magnetic entropy of YbNi₂Sn (Example 1);
- Fig. 9: calculated estimates of final temperatures T_{f} for YbNi₂Sn (Example 1);
- Fig. 10: a test setup for determining the cooling performance of adiabatic coolants;
- Fig. 11: temperatures reached in ADR experiments with YbNi₂Sn (Example 1);
- Fig. 12: table of properties of known adiabatic coolants and YbNi₂Sn (Example 1);
- Fig. 13: an X-ray diffraction pattern of (Yb_{0.9}La_{0.1})Ni₂Sn (Example 2);
- Fig. 14: an X-ray diffraction pattern of (Yb_{0.8}Lu_{0.2})Ni₂Sn (Example 3);
- Fig. 15: an X-ray diffraction pattern of (Yb_{0.6}Lu_{0.4})Ni₂Sn (Example 4);
- Fig. 16: an X-ray diffraction pattern of (Yb_{0.4}Lu_{0.6})Ni₂Sn (Example 5);
- Fig. 17: temperature-dependent specific heat capacities of YbNi₂Sn (Example 1), (Yb_{0.8}Lu_{0.2})Ni₂Sn (Example 3) and (Yb_{0.6}Lu_{0.4})Ni₂Sn (Example 4);
- Fig. 18: an X-ray diffraction pattern of Yb(Ni_{0.8}Co_{0.2})₂Sn (Example 6);
- Fig. 19: an X-ray diffraction pattern of Yb(Ni_{0.8}Cu_{0.2})₂Sn (Example 7);
- Fig. 20: an X-ray diffraction pattern of Yb(Ni_{0.8}Ag_{0.2})₂Sn (Example 8);
- Fig. 21: temperatures reached in ADR experiments with Yb(Ni_{0.8}Co_{0.2})₂Sn (Example 6);
- Fig. 22: temperatures reached in ADR experiments with Yb(Ni_{0.8}Cu_{0.2})₂Sn (Example 7);
- Fig. 23: temperatures reached in ADR experiments with Yb(Ni_{0.8}Ag_{0.2})₂Sn (Example 8);
- Fig. 24: an X-ray diffraction pattern of YbNi₂(Sn_{0.8}In_{0.2}) (Example 9);
- Fig. 25: an X-ray diffraction pattern of YbNi₂(Sn_{0.8}Bi_{0.2}) (Example 10);
- Fig. 26: temperatures reached in ADR experiments with YbNi₂(Sn_{0.8}In_{0.2}) (Example 9);
- Fig. 27: temperatures reached in ADR experiments with YbNi₂(Sn_{0.8}Bi_{0.2}) (Example 10).

### Example 1: YbNi₂Sn

As a first example, intermetallic compound YbNi₂Sn has been synthesised as an adiabatic coolant. Synthesis of the compound has been performed in an arc melting process under ultrapure argon atmosphere from elemental Yb, Ni and Sn. These elements have each been weighed and provided in an amount depending on their stoichiometry in the target compound YbNi₂Sn (step (1)) in the molar ratio of a:b:c. , however, Yb was provided in a 10 wt% excess based on the total weight of Yb in the final compound in order to compensate for losses of Yb in the final product due to the low boiling point of Yb of T_{b} = 1469 K: Because of this, the provided amount of Yb may not be available for the chemical reaction completely due to its high vapour pressure, leading to evaporation of unreacted Yb. In particular, at reaction temperatures between 820°C and 1460°C around 10% of the heated Yb vaporize into the gas phase unreacted and condense throughout the reaction chamber upon cooling. Depending on the specific reaction conditions and the specific alloy composition, Yb may typically be used in excess of 8 wt% to 20 wt% based on the total weight of Yb in the final compound.

A chemical reaction may consist of a sequence of partial reactions. The synthesis of the adiabatic coolant may thus be performed as a multiple-stage reaction, e.g., a two-stage reaction. For example, the synthesis of YbNi₂Sn alloy was performed by first synthesising YbSn from Yb + Sn and then synthesizing YbNi₂Sn from YbSn + 2Ni because of the hugely different melting points of the elements (T_{melt,Yb} ≈ 1100 K, T_{meit,Ni} ≈ 1730 K and T_{meit,sn} ≈ 500 K). In particular, a two-stage arc-melting process was used. In a first stage, an appropriate amount of Yb and Sn were mixed in a water-cooled Cu crucible (step (2-1)) and melted (step (3-1)) to a small button. The first partial reaction takes place at approximately 820°C, i.e. at the melting point of Yb. Once the elements Yb and Sn are both in the liquid phase, a strong exothermic reaction takes place due to particular features of the binary Yb-Sn phase diagram.

In a second stage, elemental Ni was mixed with the pre-reacted YbSn intermediate product (step (2-2)) and melted (step (3-2)). The second crucial partial reaction takes place at around 1460°C. Above this temperature the activation energy is sufficient for a complete reaction of Yb, Ni and Sn to occur in order to provide YbNi₂Sn. In this step the product was repeatedly melted and turned over to enhance homogeneity and ensure completeness of the chemical reaction.

This is applicable to other compositions of the adiabatic coolant in the following way: In a first partial reaction, the low melting elements may be reacted with one another (e.g., Yb and In, if In is used instead or in addition to Sn). In a second step, the higher melting elements are added and melted with the pre-reacted "low melting mixture". Alternatively, the synthesis may also be performed as a one-stage reaction.

Afterwards, the melt was cooled rapidly in the water-cooled Cu crucible by switching off the arc melting furnace. It is possible to obtain the YbNi₂Sn compound in a one-stage reaction as well. For this purpose, Yb, Ni and Sn are all mixed together in the crucible and melted at least once by arc melting at a temperature of, e.g., 3000 to 4000°C. Cooling is performed as described for the two-stage process.

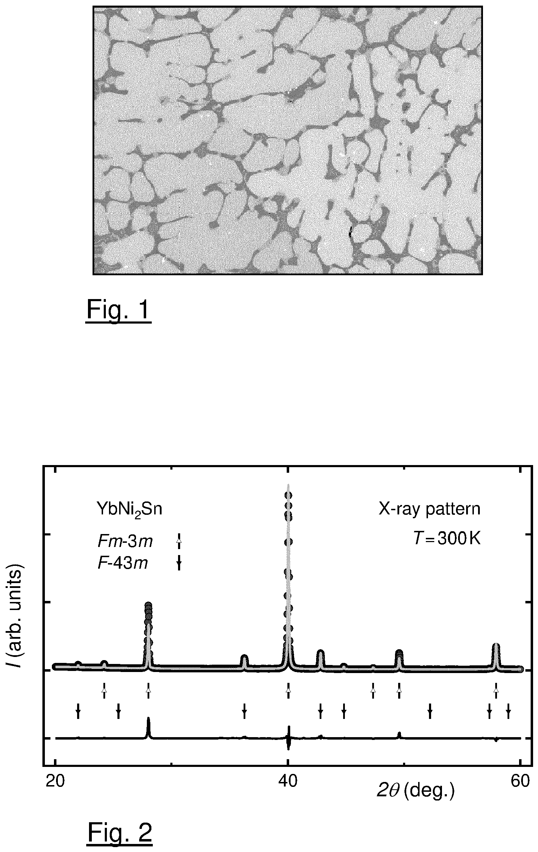

Analysis of the as-cast compound was performed by energy-dispersive X-ray spectroscopy (EDX) analysis with a scanning electron microscope (SEM). The result is shown in Fig.1 and reveals that the resulting compound is not phase-pure, but rather includes a main phase comprising YbNi₂Sn and a minor phase comprising YbNi₄Sn. The resulting adiabatic coolant is a polycrystalline compound.

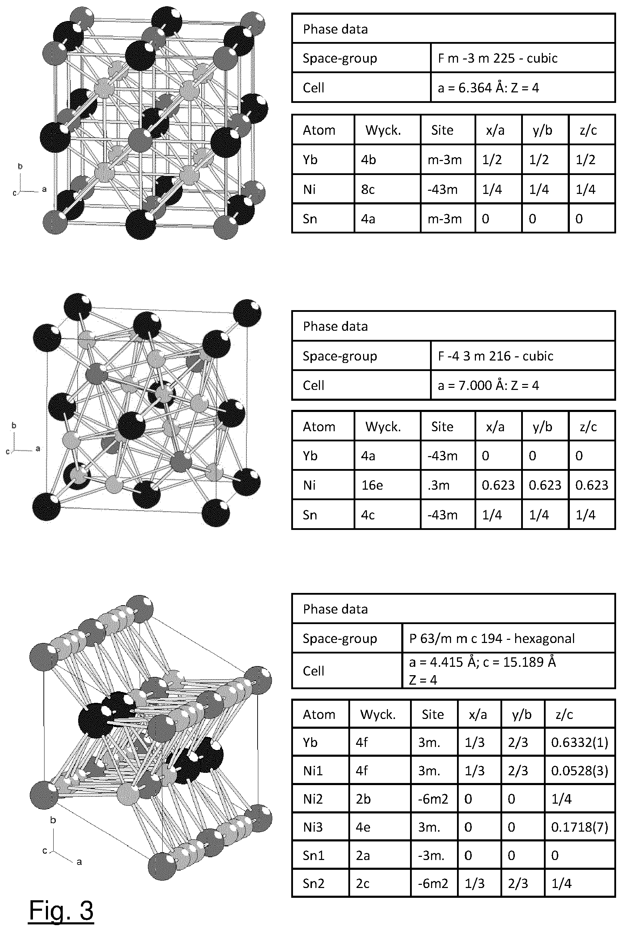

Crystal structural analysis of the compound was performed by X-ray powder diffraction at room temperature (T = 300 K). A corresponding X-ray spectrum is shown in Fig. 2. The Bragg reflections in the X-ray pattern indicate an underlying body-centered cubic structure: Yb, Ni and Sn are mostly arranged in a cubic Heusler structure (*L*2₁, *Fm-3m,* space group No. 225) with a cell parameter of a = 6.364 Å and an Yb:Ni:Sn ratio of 1:2:1. The spectrum further reveals minor contributions of a second phase corresponding to a cubic *F-43m* (having space group No. 216) structure with an Yb:Ni:Sn ratio of 1:4:1. An overview of the corresponding crystal structures is shown in Fig. 3

Rietveld refinement of the X-ray spectrum of Fig. 2 revealed approximately 90% of YbNi₂Sn in the cubic Heusler phase having space group No. 225 and approximately 10% of YbNi₄Sn in the cubic 1:4:1 phase having space group No. 216. For the sake of simplicity the compound of Example 1 will simply be referred to as YbNi₂Sn also in the following.

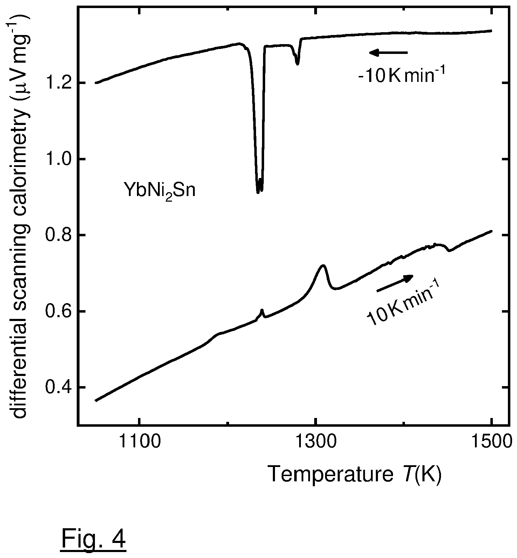

Fig. 4 shows the result of a differential scanning calorimetry experiment performed with YbNi₂Sn. The YbNi₂Sn phase, which is the functional phase for adiabatic cooling of YbNi₂Sn, forms a meta-stable phase at temperatures below 1300 K. Thus, the cooling step (step (4)) of the synthesis is crucial for obtaining a functional and well-performing material for ADR. Nevertheless, the YbNi₂Sn phase is stable below 500 K and thus a bake-out of the material in order to remove volatile particles for ultra-high vacuum applications is possible.

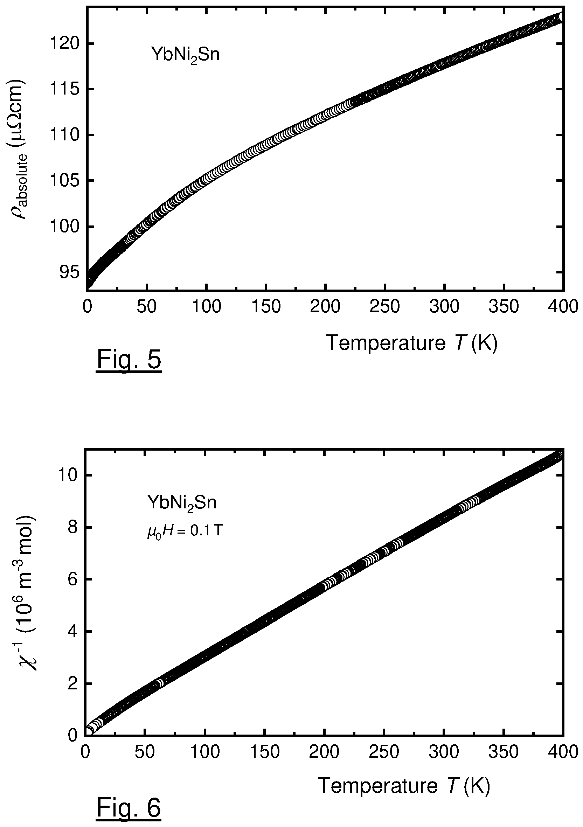

Fig. 5 shows the temperature-dependent electrical resistivity of YbNi₂Sn. The positive slope proves the metallic character of the compound. As the absolute values of the electrical resistivity are rather low, the compound possesses a high metallic thermal conductivity in accordance with the Wiedemann-Franz law. Further, Fig. 5 also confirms the absence of superconductivity in YbNi₂Sn and thus, no weakening of the electronic thermal conductivity is to be expected for this coolant.

Fig. 6 shows the temperature dependence of the inverse susceptibility X⁻¹(T) of YbNi₂Sn in an external field of µ₀H = 0.1 T. It displays an almost linear behaviour, which can be fitted with a Curie-Weiss law with an effective magnetic moment µ_{eff} = 4.77 µ_{B} which is indicative of a stable Yb³⁺ state. The fitted Weiss temperature θ_{W} ≈ 0 K is an indicator of a weak Yb-Yb intersite exchange interaction (RKKY interaction).

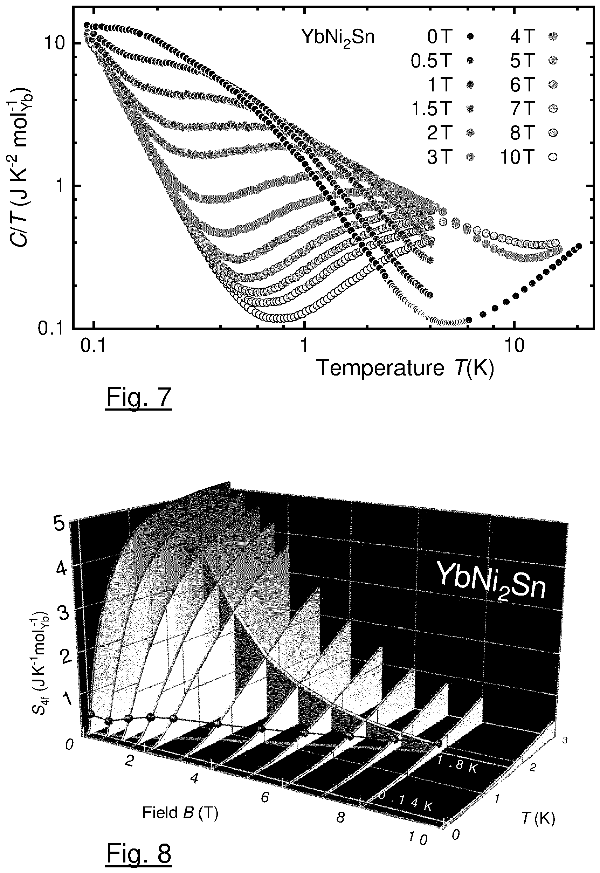

Fig. 7 shows the temperature dependence of the measured specific heat capacity C/T of YbNi₂Sn in magnetic fields of 0 T to 10 T, which helps to further elucidate the overall strength of the Yb-Yb interaction. In zero field, C/T shows a clear minimum at around 3.5 K and increases continuously with decreasing T until a broad anomaly appears at T₀ ≈ 140 mK. With further decreasing temperature C/T stays approximately constant. The broad anomaly at T₀ is an indicator of magnetic order of local moments dominated by short-range correlations.

At finite magnetic field strengths Schottky anomalies appear in C/T. This confirms the intersite exchange in YbNi₂Sn to be so weak that already magnetic fields below, e.g., 4 T are sufficient to induce Zeeman splitting of the 4f states. At low temperatures below approximately 300 mK the specific heat increases strongly showing a C/T α T⁻³ power law. This increase can be attributed to nuclear Yb contributions.

Fig. 8 shows a three-dimensional representation of the 4f-electron magnetic entropy of YbNi₂Sn calculated at all measured magnetic fields of Fig. 7. Regions with the same grey shading are isentropic. An isothermal magnetisation wedge connects all fins up to 8 T at a constant temperature of a surrounding thermal bath Tᵢ = 1.8 K. Starting at Tᵢ and Bᵢ, a temperature-versus-field line of an actually measured quasi-adiabatic demagnetisation levels to 141 mK at zero field. Projected entropy values represented by small balls show slight differences from perfectly adiabatic conditions as a result of parasitic heat loads.

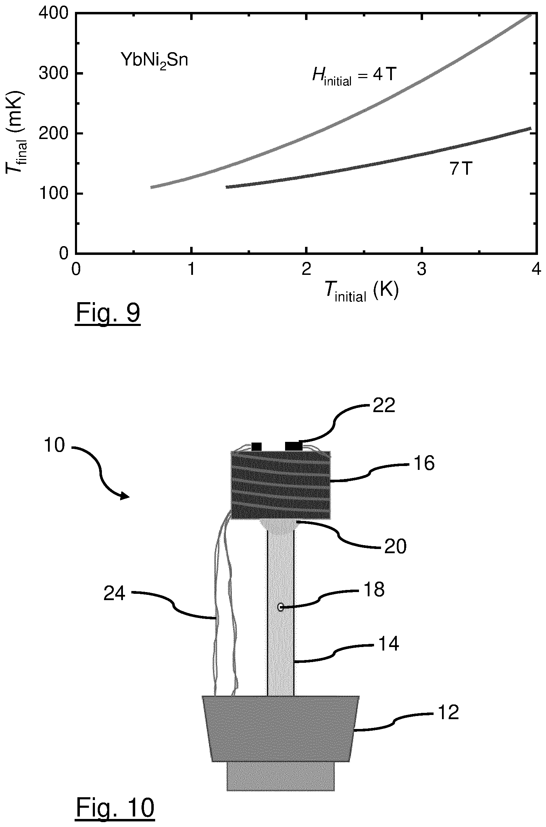

Fig. 9 shows calculated estimates for the initial temperature Tᵢ-dependence of the final temperature T_{f} obtained by integrating (δT/δH|ₛ). The calculations suggest that for Tᵢ ≈ 800 mK a base temperature T₀ ≈ 100 mK may be possible.

Fig. 10 shows an experimental setup 10 used for testing the cooling performance of YbNi₂Sn or other adiabatic coolants. An ADR setup 10 for testing the practical performance of the adiabatic coolants was built on a Quantum Design Physical Property Measurement System (PPMS). The setup 10 is built on a puck 12 supporting a thin-wall polyether ether ketone (PEEK) tube 14, which is designed to thermally isolate and mechanically support the compound 16, e.g. YbNi₂Sn from a He-bath and a ⁴He blank puck 12. For ventilation, the PEEK tube 14 features a small hole 18. The sample compound 16 is fixed on top of the PEEK tube 14 using fast drying epoxy adhesive 20. A ruthenium oxide (RuO₂) thermometer 22, which has been previously calibrated to temperatures below 80 mK in a dilution refrigerator, was directly glued to the magnetocaloric material using GE varnish and reports the temperature of the sample compound 16. Superconducting wires 24 were used for establishing electrical connections to the thermometer 22 to minimise heat leaks at base temperature.

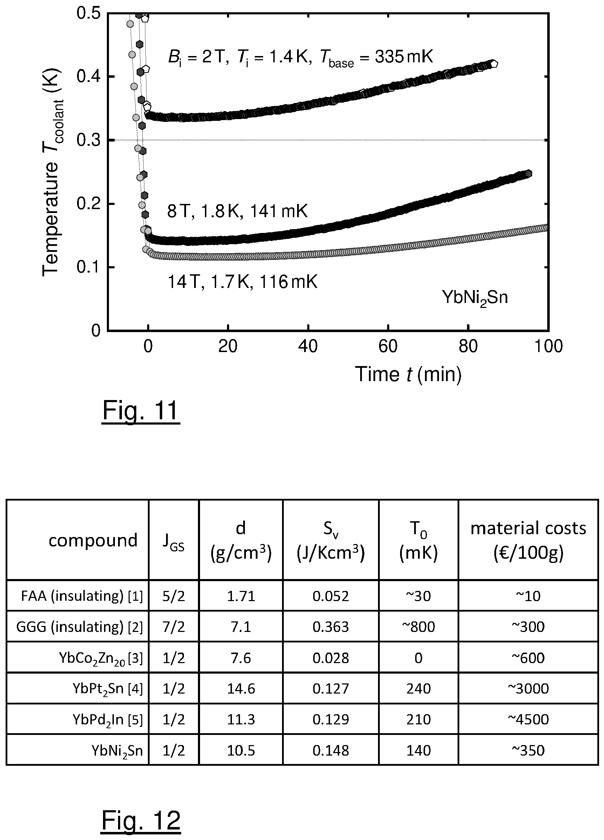

Results of the cooling performance of YbNi₂Sn are shown in Fig. 11. For testing the performance of a coolant in the ADR setup 10, the setup 10 is cooled down from room temperature under small He pressure around 6 mbar to a set bath temperature Tᵢ using ⁴He-based cooling. As the sample compound 16 reaches the temperature Tᵢ set for ⁴He pre-cooling, the initial magnetic field Bᵢ is applied to the sample, leading to an alignment of the magnetic moments and thus to heating of the coolant sample 16 due to the resulting decrease of the magnetic entropy due to the MCE. The He-bath helps bringing the temperature of the coolant sample 16 down to the bath temperature by absorbing the heat generated due to the magnetisation and to stabilise it there. When the temperature of the adiabatic coolant is at equilibrium with the bath temperature Tᵢ again, quasi-adiabatic conditions are established by evacuating the ⁴He gas. Only very limited thermal conductivity may then occur through the PEEK tube 14 and the superconducting wires 24 (see Fig. 10). At this point, the magnetic field Bᵢ is slowly removed. The thermal energy available in the adiabatic coolant sample 16 causes the magnetic moments to overcome the decreasing magnetic field, leading to rapid cooling of the sample 16 as thermal energy is transferred to magnetic entropy.

For testing the cooling performance of YbNi₂Sn, Tᵢ was set to 1.4 K, 1.8 K or 1.7 K, while Bᵢ was set to 2 T, 8 T or 14 T (Fig. 11, top curve to bottom curve). The base temperatures reached with these parameters were as low as 335 mK, 141 mK or even 116 mK. Several test runs gave highly reproducible results and in general, it was comparably simple to reach and hold a temperature T < 300 mK for at least one hour even with the basic setup design as shown in Fig. 10.

Fig. 12 shows a table summarising the properties of YbNi₂Sn in comparison with magnetocaloric materials which are either already popularly used for ADR, e.g., FAA or GGG, or which have been proposed as suitable materials in more recent publications ([1] FeNH₄(SO₄)₂ · 12(H₂O); Vilches et al., Phys. Rev., 148 (1966) 509-516; [2] Gd₃Ga₅O₁₂; Hornung et al., Chem. Phys., 61 (1974) 282; [3] Yb_{0.81}Sc_{0.19}Co₂Zn₂₀; Tokiwa et al., Sci. Adv., 2 (2016) e1600835; [4] YbPt₂Sn; Gruner et al., J. Phys.: Condens. Matter, 26 (2014) 485002; [5] YbPd₂In; Gastaldo et al., PRB, 100 (2019) 174422).

The magnetic ordering temperature T₀ roughly determines the base temperature which can be reached for a specific compound via adiabatic cooling. Fig. 12 illustrates that YbNi₂Sn may allow cooling to lower base temperatures than the recently proposed YbPd₂In and YbPt₂Sn compounds while being much more cost-efficient due to the low-price raw materials. In comparison to the YbCo₂Zn₂₀ compound, YbNi₂Sn features a much higher volumetric entropy capacity S_{V}. This is also due to the larger density in YbNi₂Sn and positively influences the cooling capacity of the compound and improves temperature holding times.

FAA has lower material cost compared to YbNi₂Sn. However, while the cost of YbNi₂Sn is just the cost of the raw material, the cost of (hydrated) paramagnetic salts for practical use in ADR will also include costs for the extra wire harness to assure good thermal contact and for hermetic sealing. In addition, the durability of such compounds is often limited in practical applications due to degradation, leading to higher rates of replacing the material.

Further example compounds according to formula (1) have been tested. In a first group of example compounds (Examples 2 to 5), the value of x has been increased in comparison to YbNi₂Sn from 0 up to 0.6 and thus the content of Yb has been reduced while substituting Yb with either Lanthanum (La) or Lutetium (Lu). Specifically, the tested compounds were
Example 2: (Yb_{0.9}La_{0.1})Ni₂Sn,
Example 3: (Yb_{0.8}Lu_{0.2})Ni₂Sn,
Example 4: (Yb_{0.6}Lu_{0.4})Ni₂Sn,
Example 5: (Yb_{0.4}Lu_{0.6})Ni₂Sn.

Compounds of Examples 2 to 5 were synthesised in the same way as Example 1, except that La or Lu was added in the first melting step.

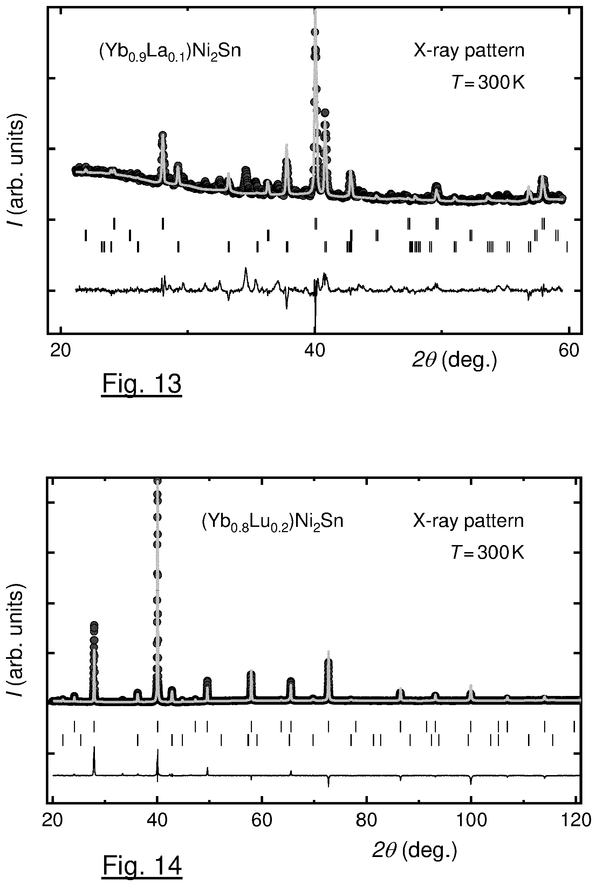

The crystal structures of these compounds have been analysed by X-ray powder diffraction and the corresponding diffraction patterns are shown in Figs. 13-16. The diffraction patterns were analysed by means of Rietveld refinement using two (Fig. 13) or three (Fig. 14 to 16) structural phases based on the structural models of pure YbNi₂Sn as shown in Fig. 3, namely the cubic Heusler structure having space group 225, the cubic structure having space group 216 and the large hexagonal unit cell structure having space group 194, which were found to be common structures of the compounds according to formula (1). While some of the compounds might contain additional structural phases, these have not been taken into account in the Rietveld refinement.

Fig. 13 shows the X-ray diffraction pattern of Example 2 ((Yb_{0.9}La_{0.1})Ni₂Sn). It reveals approximately 54% of a cubic Heusler type structure 225 as the main structural phase (peak positions of Heusler 225 are indicated by upper set of marks) and approximately 37% of a large hexagonal phase 194 as a second structural phase (peak positions of large hexagonal phase 194 are indicated by lower set of marks) and a third phase of approximately 9% corresponding to a cubic 1:4:1 structure (peak positions of cubic 1:4:1 phase having space group 216 are indicated by middle set of marks). Further peaks in the X-ray pattern reveal the existence of at least one further phase which is unrefined until now.

Fig. 14 shows the X-ray diffraction pattern of Example 3 ((Yb_{0.8}Lu_{0.2})Ni₂Sn). It reveals approximately 88% of a cubic Heusler type structure having space group 225 (upper set of marks) as the main structural phase and approximately 12% of a cubic 1:4:1 structure having space group 216 (lower set of marks) as a further structural phase. Thus, the X-ray diffraction pattern is nearly identical to the one observed for Example 1 (YbNi₂Sn).

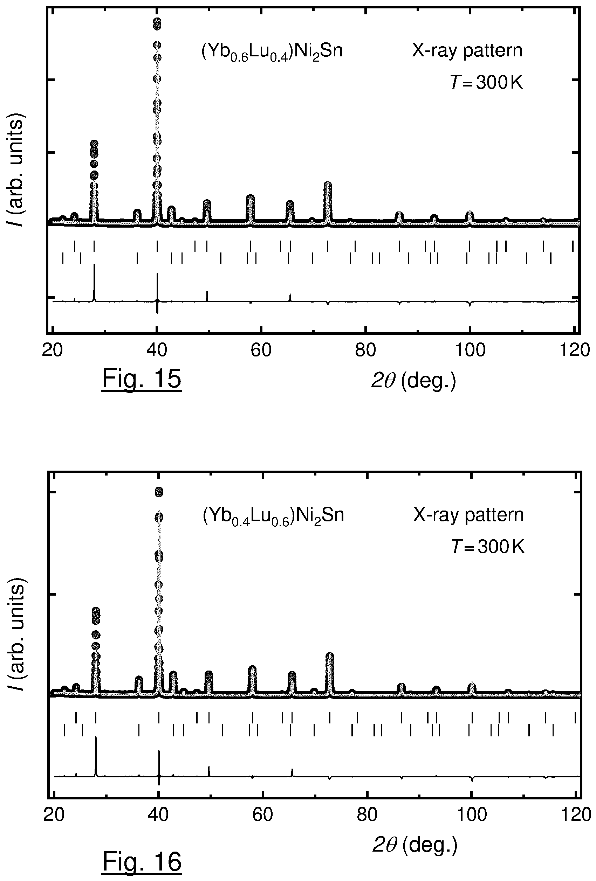

Fig. 15 shows the X-ray diffraction pattern of Example 4 ((Yb_{0.6}Lu_{0.4})Ni₂Sn). It also reveals approximately 87% of a cubic Heusler type structure having space group 225 (upper set of marks) as the main structural phase and approximately 13% of a cubic 1:4:1 structure having space group 216 (lower set of marks) as a further structural phase. Thus, the X-ray diffraction pattern is nearly identical to the one observed for Example 1 (YbNi₂Sn) and for Example 3 ((Yb_{0.8}Lu_{0.2})Ni₂Sn).

Fig. 16 shows the X-ray diffraction pattern of Example 5 ((Yb_{0.4}Lu_{0.6})Ni₂Sn). It also reveals approximately 85% of a cubic Heusler type structure having space group 225 (upper set of marks) as the main structural phase and approximately 15% of a cubic 1:4:1 structure having space group 216 (lower set of marks) as a further structural phase. Thus, the X-ray diffraction pattern is nearly identical to the one observed for Example 1 (YbNi₂Sn), just as observed for Example 3 and Example 4.

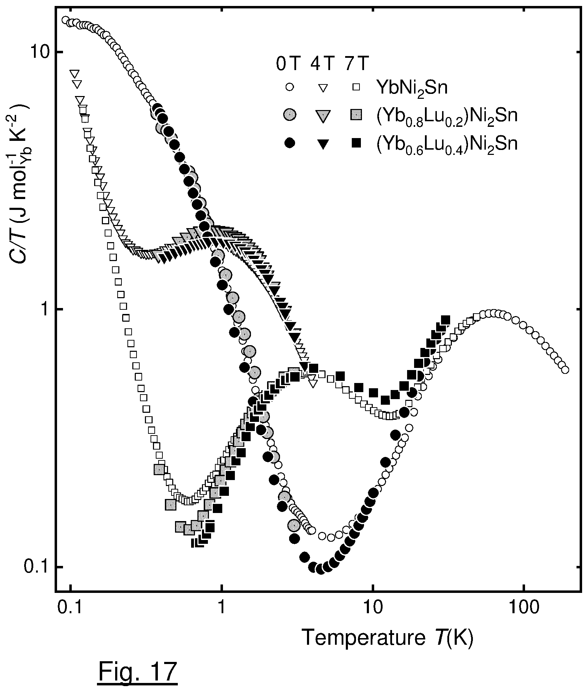

For Example 3 and Example 4 the temperature-dependent specific heat capacity C/T has been determined as shown in comparison to the specific heat capacity of Example 1 in Fig. 17. The specific heat capacity of the Lu-substituted compounds of Example 3 and Example 4 is nearly identical to the heat capacity observed for Example 1 and thus suggests the same weak magnetic exchange and a similar cooling capacity per Yb-ion as in YbNi₂Sn (Example 1). Basically, the Lu- and La-substituted compounds of the first group of examples may be interpreted as "diluted YbNi₂Sn", showing the same properties as YbNi₂Sn of Example 1 while having a reduced concentration of magnetic moments.

In a second group of example compounds (Examples 6 to 8), the value of y has been increased in comparison to YbNi₂Sn from 0 to 0.2 and thus the content of Ni has been reduced while substituting Ni with either Cobalt (Co), Copper (Cu) or Silver (Ag). Specifically, the tested compounds were
Example 6: Yb(Ni_{0.8}Co_{0.2})₂Sn
Example 7: Yb(Ni_{0.8}Cu_{0.2})₂Sn,
Example 8: Yb(Ni_{0.8}Ag_{0.2})₂Sn.

Compounds of Examples 6 to 8 were synthesised in the same way as Example 1, except that Co, Cu or Ag was added in the second melting step.

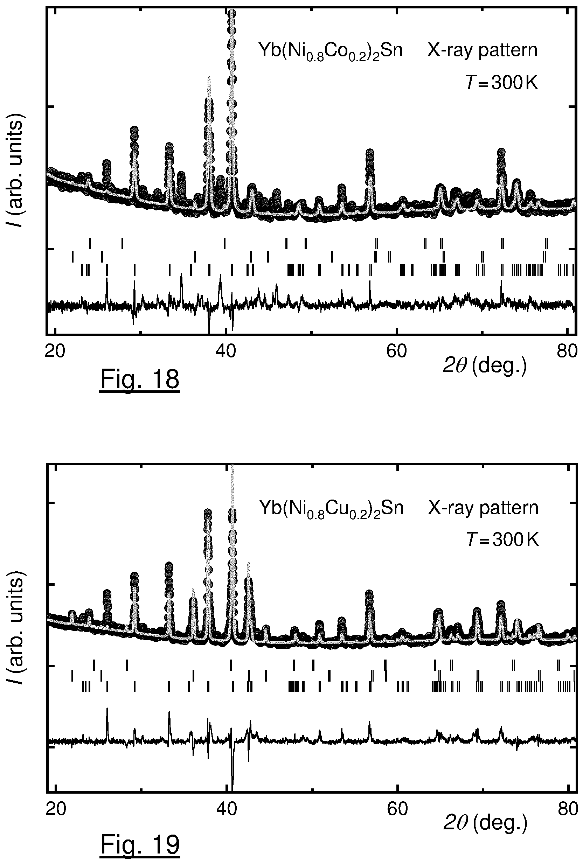

The X-ray powder diffraction spectra of these compounds as well as corresponding Rietveld refinements are shown in Figs. 18-20.

Fig. 18 shows the X-ray diffraction pattern of Example 6 (Yb(Ni_{0.8}Co_{0.2})₂Sn). It reveals approximately 97% of a large hexagonal structure having space group 194 (lower set of marks) as the main structural phase. Further peaks in the X-ray pattern reveal approximately 2% of a cubic 1:4:1 structural phase having space group 216 (middle set of marks) and approximately 1% of a cubic Heusler type structure having space group 225 (upper set of marks) as further structural phases. Further faint peaks indicate the existence of traces of at least one additional phase which is unrefined until now.

Fig. 19 shows the X-ray diffraction pattern of Example 7 (Yb(Ni_{0.8}Cu_{0.2})₂Sn). It reveals approximately 72% of a large hexagonal structure having space group 194 (lower set of marks) as the main structural phase and approximately 23% of a cubic 1:4:1 structure having space group 216 (middle set of marks) and approximately 5% of a cubic Heusler type structure having space group 225 (upper set of marks) as further structural phases. Further, faint peaks indicate the presence of traces of at least one additional structural phase.

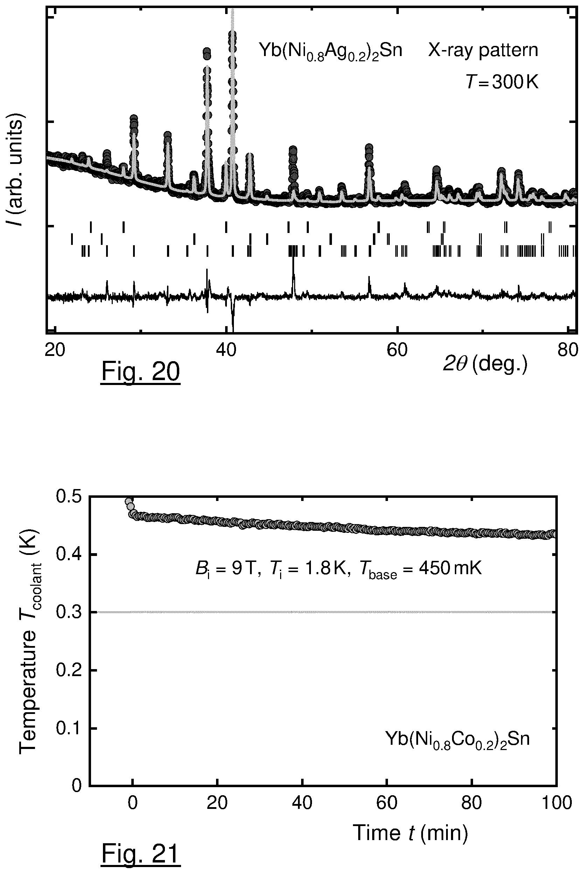

Fig. 20 shows the X-ray diffraction pattern of Example 8 (Yb(Ni_{0.8}Ag_{0.2})₂Sn). It reveals approximately 84% of a large hexagonal structure having space group 194 (lower set of marks) as the main structural phase and approximately 8% of a cubic Heusler type structure having space group 225 (upper set of marks) and approximately 8% of a cubic 1:4:1 structure having space group 216 (middle set of marks) as further structural phases. The presence of traces of at least one additional phase is revealed by further faint peaks.

All of Examples 6 to 8 show a large hexagonal structure having space group 194 as the main structural phase. The cubic Heusler type structure with space group 225, which is typical for YbNi₂Sn of Example 1, plays only a minor role in Examples 6 to 8, nevertheless a cooling effect was observed.

For Examples 6 to 8 the cooling performance was determined using an experimental setup 10 as shown in Fig. 10 and as described above with an initial temperature Tᵢ = 1.8 K and an initial magnetic field Bᵢ = 9 T. The results are shown in Figs. 21-23.

Fig. 21 shows the cooling performance of Example 6 (Yb(Ni_{0.8}Co_{0.2})₂Sn). A final temperature T_{f} ≈ 450 mK can be reached.

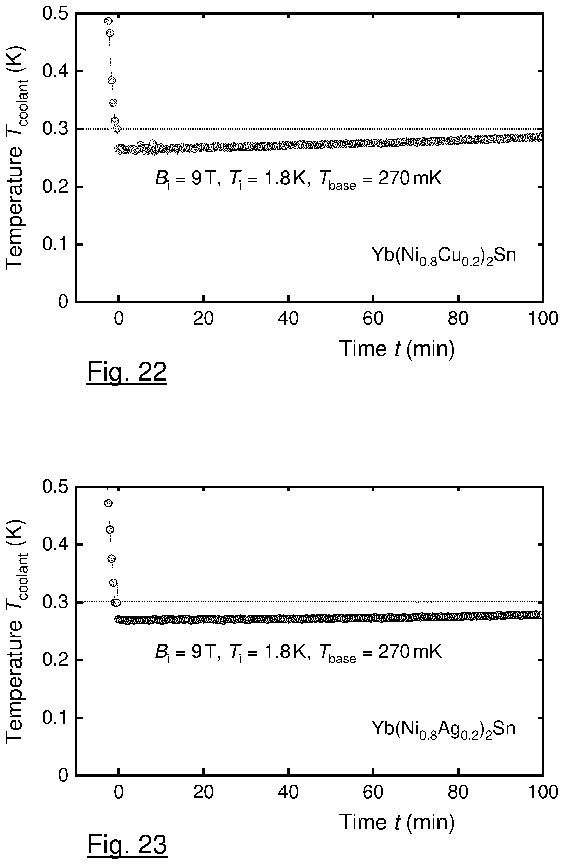

Fig. 22 shows the cooling performance of Example 7 (Yb(Ni_{0.8}Cu_{0.2})₂Sn). A final temperature T_{f} ≈ 270 mK can also be reached.

Fig. 23 shows the cooling performance of Example 8 (Yb(Ni_{0.8}Ag_{0.2})₂Sn). A final temperature T_{f} ≈ 270 mK can be reached similar to Example 7 (Fig. 22).

In a third group of example compounds (Examples 9 and 10) according to formula (2), the value of z has been increased in comparison to Example 1 from 0 to 0.2 and thus the content of Sn has been reduced while substituting Sn with either Indium (In) or Bismuth (Bi). Specifically, the tested compounds were
Example 9: YbNi₂(Sn_{0.8}In_{0.2}),
Example 10: YbNi₂(Sn_{0.8}Bi_{0.2}).

Compounds of Examples 9 and 10 were synthesised in the same way as Example 1, except that In or Bi were added in the first melting step.

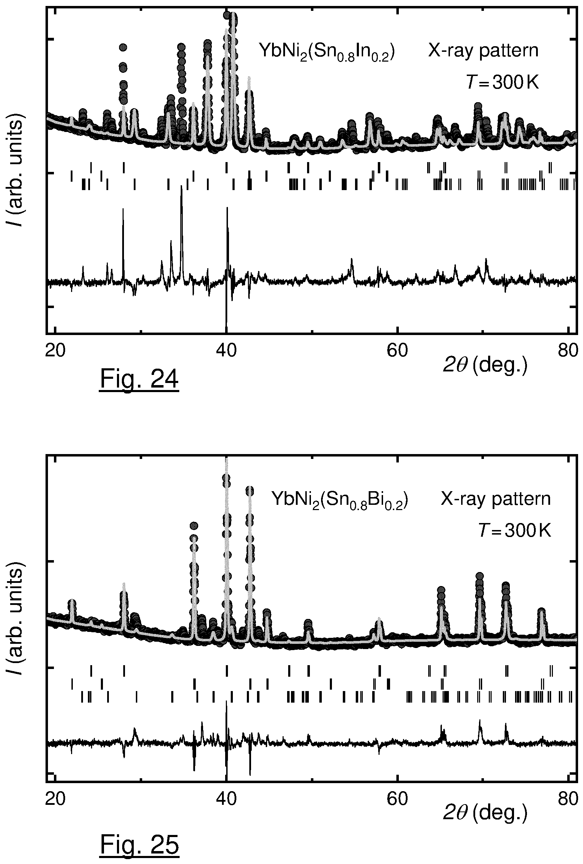

The X-ray powder diffraction spectra of these compounds and corresponding Rietveld refinements are shown in Figs. 24-25.

Fig. 24 shows the X-ray diffraction pattern of Example 9 (YbNi₂(Sn_{0.8}In_{0.2})). It reveals approximately 66% of a large hexagonal structure having space group 194 (lower set of marks) as the main structural phase and approximately 18% of a cubic Heusler type structure with space group 225 (upper set of marks) and approximately 15% of a cubic 1:4:1 structure having space group 216 (middle set of marks) as additional structural phases. The presence of traces of at least one further phase is indicated by further faint peaks.

Fig. 25 shows the X-ray diffraction pattern of Example 10 (YbNi₂(Sn_{0.8}Bi_{0.2})). It reveals approximately 50% of a large hexagonal structure having space group 194 (lower set of marks) as the main structural phase and approximately 40% of a cubic Heusler type structure having space group 225 (upper set of marks) and approximately 10% of a cubic 1:4:1 structure having space group 216 (middle set of marks) as further structural phases. Further faint peaks indicate the presence of traces of at least one additional phase.

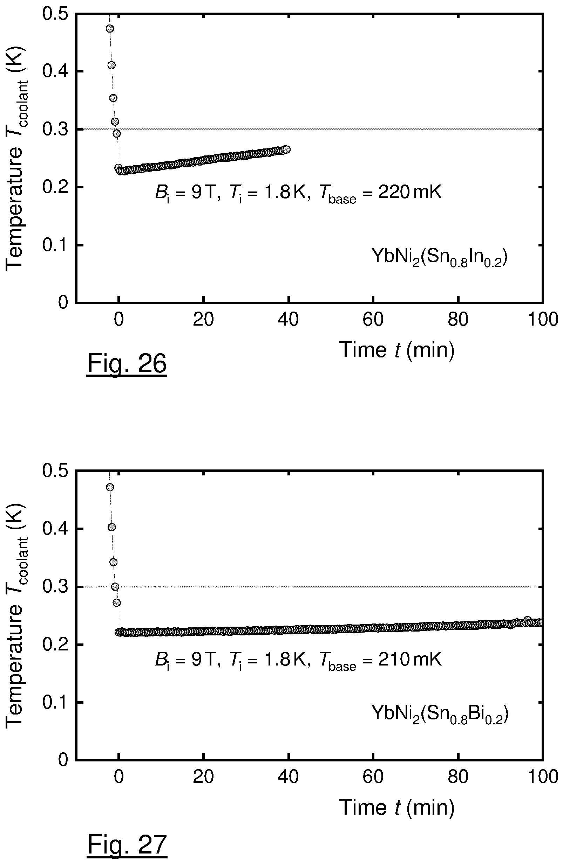

Also for the third group of example compounds (Examples 9 and 10) the cooling performance was determined using an experimental setup 10 as shown in Fig. 10 and as described above with an initial temperature Tᵢ = 1.8 K and an initial magnetic field Bᵢ = 9 T. The results are shown in Figs. 26-27.

Fig. 26 shows the cooling performance of Example 9. A final temperature T_{f} ≈ 220 mK can be reached.

Fig. 27 shows the cooling performance of Example 10. A final temperature T_{f} ≈ 210 mK can be reached and stably held for an extended period of time.

Thus, the compounds of Examples 1 to 10 are all suitable adiabatic coolants. The best cooling performance in the group of tested compounds is reached by Example 1.

### List of reference signs

- 10: experimental ADR setup
- 12: puck
- 14: polyether ether ketone (PEEK) tube
- 16: sample compound
- 18: ventilation hole
- 20: epoxy adhesive
- 22: ruthenium oxide (RuO₂) thermometer
- 24: superconducting wires

## Claims

1. An adiabatic coolant for cooling below 7 K, the adiabatic coolant comprising:
a compound according to formula (1):
(Yb₁₋ₓAₓ)ₐ(Ni_{1-y}B_{y})_{b}(C)_{c} (1)
wherein A is one or more members selected from rare earth elements other than Yb;
B is one or more members selected from the group of members consisting of Al, Ga, Ge, Fe, Mn, V, Co, Cu, Rh, Pd, Ag, Ir, Pt, and Au;
C is one or more members selected from the group of members consisting of Sn, In, Tl, Pb, and Bi;
x is in the range of 0 to 0.9;
y is in the range of 0 to 1 when B is one or more selected from the group consisting of Al, Ga, Ge, Fe, Mn, V, Co, Cu, Rh, Ag, Ir, and Au;
y is in the range of 0 to less than 1 when B is Pd or Pt; and wherein
a, b and c satisfy the following conditions:
a = c
0.25a ≤ b ≤ 4a.

2. An adiabatic coolant in accordance with claim 1,
wherein x is in the range of 0 to 0.7, preferably in the range of 0 to 0.5, more preferably in the range of 0 to 0.3.

3. An adiabatic coolant in accordance with claim 1 or 2,
wherein y is equal to or greater than 0.1.

4. An adiabatic coolant in accordance with any one of the preceding claims, wherein y is equal to or less than 0.9, preferably equal to or less than 0.7, more preferably equal to or less than 0.5, even more preferably equal to or less than 0.3.

5. An adiabatic coolant in accordance with any one of the preceding claims, wherein the ratio of a:b:c is 1:1:1 or 1:1.7:1 or 1:2:1 or 1:4:1, preferably a is 1, b is 1 or 1.7 or 2 or 4 and c is 1.

6. An adiabatic coolant in accordance with any one of the preceding claims, wherein the compound according to formula (1) has a structure corresponding to a Heusler compound or corresponding to a half Heusler compound or corresponding to a hexagonal ZrPt₂Al structure type,
preferably, the structure is a cubic L2₁ type structure corresponding to a Heusler compound or a C1_{b} structure corresponding to a half Heusler compound.

7. An adiabatic coolant in accordance with any one of the preceding claims, wherein the compound has a metastable phase.

8. An adiabatic coolant in accordance with any one of the preceding claims, wherein the adiabatic coolant is in the form of an ingot, a powdered substance or a sintered powder.

9. An adiabatic coolant in accordance with any one of the preceding claims, wherein the adiabatic coolant has at least one flat surface.

10. A method of producing an adiabatic coolant in accordance with any one of the preceding claims, comprising the steps of
(1) providing each of the elements contained in the final compound of the adiabatic coolant in elemental form in an amount depending on the stoichiometry of the adiabatic coolant,
(2) mixing the elements in a crucible,
(3) melting the mixed elements at least once, in particular in an arc melting process to form a melt,
(4) cooling the melt.

11. A method in accordance with claim 10,
wherein in step (1) Yb is provided in excess with respect to the stoichiometry of the final compound, in particular in an excess in the range of 8 wt% to 20 wt% based on the total weight of Yb in the final compound.

12. A method in accordance with claim 10 or 11,
wherein the steps (2) and (3) of mixing and melting are performed as a two-stage reaction,
wherein preferably in a first stage Yb and optionally further one or more rare earth element(s) other than Yb are mixed in a step (2-1) with at least one member selected from the group of members consisting of Sn, In, Tl, Pb, and Bi and are melted in a step (3-1) to obtain an intermediate product, and in a second stage the intermediate product obtained after step (3-1) is mixed in a step (2-2) with at least one member selected from the group of members consisting of Ni, Al, Ga, Ge, Fe, Mn, V, Co, Cu, Rh, Pd, Ag, Ir, Pt, and Au to obtain a mixture, wherein when Pt or Pd is added in step (2-2), at least a further metal selected from the group of members consisting of Al, Ga, Ge, Fe, Mn, V, Co, Cu, Rh, Ag, Ir, and Au is added to obtain a mixture, and melting the mixture in a step (3-2) to form a melt.

13. A method in accordance with any one of claims 10 to 12,
wherein the method further comprises a step (5) of powdering the product obtained after step (4).

14. A method in accordance with claim 13,
wherein the method further comprises a step of forming the powdered product into a body of required shape and optionally sintering the shaped body.

15. A method in accordance with any one of claims 10 to 14,
wherein the method comprises moulding of the adiabatic coolant into a shape with at least one flat surface.

16. Use of an adiabatic coolant in accordance with any one of claims 1 to 9, preferably obtainable by a method according to any one of claims 10 to 15, for adiabatic cooling to temperatures below 7 K.

17. An adiabatic cooling device, the adiabatic cooling device comprising an adiabatic coolant according to any one of claims 1 to 9, preferably obtainable by a method according to any one of claims 10 to 15.

18. A device in accordance with claim 17,
wherein the adiabatic coolant is at least partially arranged around a sample space.

19. A device in accordance with claim 17 or 18,
wherein the device further comprises a magnetic field generator and a pre-cooling apparatus.
